# EUROPÄISCHE PATENTANMELDUNG

(11) **EP 0 733 657 A1**
(43) Veröffentlichungstag der Anmeldung: **25.09.1996**
(21) Anmeldenummer: 96103532.6
(22) Anmeldetag: 07.03.1996
(51) Int. Cl.: C08G 18/65, C08G 18/38

(54) **Verfahren zur Herstellung von gegebenenfalls zelligen Polyurethanen und/oder Polyurethanharnstoffen**

(30) Priorität: 20.03.1995 DE 19510056
(71) Anmelder: BAYER AG, 51368 Leverkusen (DE)
(72) Erfinder: von Bonin, Wulf, Dr., 51519 Odenthal (DE); Müller, Hanns-Peter, Dr., 51519 Odenthal (DE); Kapps, Manfred, 51467 Bergisch Gladbach (DE)

(57) **Zusammenfassung**

Gegebenenfalls zellige Polyurethane und/oder Polyurethan-harnstoffe werden durch Umsetzung von Polyisocyanaten mit
A) mindestens zwei Hydroxylgruppen aufweisenden nicht-basischen Verbindungen vom Molekulargewicht 62 bis 10 000 in Gegenwart von
B) basischen Polyhydroxylverbindungen und/oder
C) deren mit Säuren gebildeten Salzen und in Gegenwart von
D) Fettsäuren und/oder
E) deren Salzen, gegebenenfalls in Gegenwart von
F) üblichen Stabilisatoren,
G) Treibmitteln und
H) weiteren Hilfsmitteln sowie
I) Füllstoffen
bei Temperaturen von 0 bis 150°C, vorzugsweise 10 bis 60°C, hergestellt, wobei die Komponente A) als mindestens 50 gew.-%ige, vorzugsweise 60 bis 95 gew.-%ige, wäßrige Lösung eingesetzt wird.

## Beschreibung

Es ist bekannt, Polyurethanschaumstoffe in Gegenwart von kleinen Mengen Wasser herzustellen, um die bei Reaktion mit den Polyisocyanaten entstehende CO₂-Menge für die Treibreaktion des Schaumstoffes auszunutzen.

Da schon geringe Wassermengen, insbesondere im Zusammenspiel mit der üblichen Aktivierung der Schaumstoffbildung zur Entwicklung großer CO₂-Mengen führen, werden jedoch nur stöchiometrisch sehr geringe Wassermengen verwendet, der Zusatz großer Wassermengen führt üblicherweise zu instabilen, inhomogenen oder zumeist unbrauchbaren, d.h. unerwünschten Verfahrensprodukten.

In DE-OS 4 414 331 und 4 438 409 werden gegebenenfalls zellige Polyurethane und/oder Polyharnstoffe beschrieben, bei denen filmbildende Al-Phosphat-Alkanolamin-Komplexe, vorliegend in wäßrigen Lösungen, zusammen mit Polyisocyanaten und basischen Polyolen, sowie Hilfsmitteln und sonstigen Zusätzen zu technisch interessanten, brandwidrigen Polyurethan/Polyharnstoff-Schaumstoffen umgesetzt werden, obgleich in solchen Rezepturen, bzw. Reaktionsgemischen, große, weit über den für Zwecke der Treibreaktion üblicherweise verwendeten Wassermengen liegende, unstöchiometrische Anteile von Wasser enthalten sind.

Kennzeichnend für diese Verfahren ist die Verwendung von wesentlichen Mengen von filmbildenden Metallphosphat-Alkanolamin-Komplexen in wäßrigen Lösungen, die überraschenderweise zur erfindungsgemäßen PU-Schaumstoffbildung herangezogen werden können, ohne daß die damit in das Herstellungsverfahren eingeschleppten großen Wassermengen die Bildung brauchbarer Schaumstoffe behindern, bzw. durch Verzehr des anwesenden Polyisocyanates eine unerwünscht heftige CO₂-Entwicklung verursachen.

Bisher konnte angenommen werden, daß für die überraschende Bildung brauchbarer Schaumstoffe nach den genannten Verfahren, die Anwesenheit der filmbildenden Metallphosphat-Komplexe erforderlich sei, möglicherweise, weil sie polymerartig erscheinenden Charakter haben, oder weil die Metalle evtl. auf die Isocyanatreaktion regulierend einwirken könnten, bzw. solche konzentrierten Lösungen der Komplexe aus unbekannten Gründen besondere Eignung für diese Verfahren hätten.

Es wurde nun jedoch übertaschenderweise festgestellt, daß auch viskose, bzw. konzentrierte, beispielsweise 75 %ige, wäßrige Lösungen von Zuckern, Eiweißhydrolysaten, oder auch anderen Polyhydroxylverbindungen ohne Mitverwendung metallorganischer oder als solcher bekannter, spezieller aminischer Katalysatoren, in ähnlicher Weise zur Herstellung technisch interessanter Schaumstoffe herangezogen werden können.

Aufgrund der vorliegenden Erfindung können nunmehr auch wasserlösliche, in den bisher üblichen PU-Schaumrezepturen unlösliche, sogenannte nachwachsende Rohstoffe, wie z.B. Saccharose, wasserlösliche Starken, Dextrine, Dextrane und ähnliche Kohlehydrate oder aus Cellulose oder Starke herstellbare Hydrolysate, sogenannte Glucose-, bzw. Zuckersirupe oder auch eiweißhaltige Lösungen auf sehr einfache Weise zur Herstellung von Schaumstoffen mit vielfältiger technischer Verwendbarkeit und mehr oder weniger guter biologischer Abbaubarkeit und/oder Brandwidrigkeit eingesetzt werden.

Gegenstand der Erfindung ist ein Verfahren zur Herstellung von gegebenenfalls zelligen Polyurethanen und/oder Polyurethan-harnstoffen durch Umsetzung von Polyisocyanaten mit
A) mindestens zwei Hydroxylgruppen aufweisenden nicht-basischen Verbindungen vom Molekulargewicht 62 bis 10 000 in Gegenwart von
B) basischen Polyhydroxylverbindungen und/oder
C) deren mit Säuren gebildeten Salzen und in Gegenwart von
D) Fettsäuren und/oder
E) deren Salzen, gegebenenfalls in Gegenwart von
F) üblichen Stabilisatoren,
G) Treibmitteln und
H) weiteren Hilfsmitteln sowie
I) Füllstoffen
bei Temperaturen von 0 bis 150°C, vorzugsweise 10 bis 60°C, dadurch gekennzeichnet, daß die Komponente A) als mindestens 50 gew.-%ige, vorzugsweise 60 bis 95 gew.-%ige, wäßrige Lösung eingesetzt wird.

Bevorzugt ist, daß
- als Polyole A) Polyalkohole und/oder Zucker und/oder N-Methylolverbindungen und/oder C-Methylolverbindungen und/oder Umsetzungsprodukte von Phosphorsäuren und/oder Borsäuren mit basischen Alkoholen (Ethanolamin) und/oder Eiweißlösungen, bzw. Eiweißhydrolysatlösungen mit in wäßriger Lösung gemessenen pH-Werten von 5 bis 8, vorzugsweise 6 bis 7,0, eingesetzt werden,
- als basische Polyole B) in bevorzugtem Maße Alkoxylierungsprodukte von Aminen, vorzugsweise erhältlich auf Basis von Ethylenoxid und/oder Propylenoxid mit insbesondere Ammoniak und/oder sonstigen Aminen wie z.B. Alkylenpolyaminen, vorzugsweise Ethylendiamin und/oder Hexamethylendiamin und/oder Polyalkylenpolyaminen, vorzugsweise Polyethylenpolyaminen eingesetzt werden, wobei insbesondere Triethanolamin, bzw. vor allem Kombinationen aus Triethanolamin und dessen Propoxylierungsprodukten mit OH-Zahlen von 400 bis 600, insbesondere 450 bis 550, hervorragend gut geeignet sind,
- als Säuren C) organische Säuren, z.B. vorzugsweise des Typs der niederen Carbonsäuren mit weniger als 8 C-Atomen und/oder anorganische Säuren, wie z.B. HCl oder HBr, vorzugsweise o-Phosphorsäure eingesetzt werden,
- als Fettsäuren D) Carbonsäuren mit mehr als 8 C-Atomen, insbesondere aliphatische, langkettige, gesättigte und/oder ungesättigte Carbonsäuren mit 9 bis 24 C-Atomen, vorzugsweise 12 bis 24 C-Atomen, vorzugsweise Ölsäure verwendet werden,
- als Salze E) der Fettsäuren D), vorzugsweise solche mit Alkalien und/oder den basischen Polyolen gemäß B) verwendet werden,
- als Stabilisatoren F) vorzugsweise die aus der PU-Chemie bekannten Polyetherpolysiloxan-Stabilisatoren verwendet werden,
- als Treibmittel G) vorzugsweise die aus der Polyurethanchemie bekannten Treibmittel, vorzugsweise FKW und/oder FCKW und/oder Kohlenwasserstoffe, vorzugsweise Cyclopentan, verwendet werden,
- als Hilfsmittel H) gegebenenfalls Harnstoff als Verarbeitungshilfe neben gegebenenfalls üblichen metallorganischen und/oder aminischen Aktivatoren, Tensiden, Reglern für Zellgröße und Zelltyp, Biociden, Konservierungsmitteln, Alterungsschutzmittel, techniküblichen halogenhaltigen und/oder halogenfreien Flammschutzmitteln, sonstigen Wirkstoffen, Farbgebern, Geruchsstoffen, Trennmitteln, verwendet wird,
- als Hilfsmittel H) wässrige, vorzugsweise 30 bis 50 gew.-%ige Lösungen von Alkalihydroyden, vorzugsweise NaOH, bzw. 50 bis 88 gew.-%ige Lösungen von H₃PO₄, verwendet werden. Durch Zusätze solcher Lösungen können fallweise die Reaktiongeschwindigkeit der Mischungen, sowie Porenstruktur und Stabilität der entstehenden Schaumstoffe beeinflußt werden,
- die erhaltenen Verfahrensprodukte bei Temperaturen zwischen 0 und 150°C, vorzugsweise 0 und 100°C, hergestellt bzw. getrocknet werden,
- die so erhaltenen Verfahrensprodukte nach techniküblichen, z.B. Gieß-, Schleuder- oder Sprühverfahren flächig, bzw. in offenen oder geschlossenen, beheizten oder unbeheizten Formen, drucklos oder unter Überdrucken nach kontinuierlich, oder batchweise arbeitenden Verfahren hergestellt werden.

Erfindungsgemäß bevorzugt sind die nach dem obengenannten Verfahren erhältlichen Schaumstoffe, die bei ca. 0 bis 150°C, vorzugsweise 10 bis 60°C, insbesondere 15 bis 50°C, hergestellt werden.

Die Verfahrensprodukte finden vorzugsweise Verwendung als
Formteile, Granulate,
Hohlraumfüllungen, Abdichtungen, Verklebungen,
Stoßabsorptionsmedien, Verpackungsmaterialien,
Abdeckungen, Beschichtungen, Vacuumpanele,
Sandwiches und/oder Konstruktionselemente thermische und/oder akustische Isolationsmaterialien,
Absorber für wäßrige und andere Flüssigkeiten,
Träger für Wirkstoffe und Mikroorganismen,
Filtermaterialien für Gase, Staube und Flüssigkeiten.

Gegenstand der Erfindung sind daher neben dem obengenannten Verfahren seine Verfahrensprodukte, insbesondere Schaumstoffe, und die obengenannte Verwendung der Verfahrensprodukte.

Die erfindungsgemäße Herstellung der bevorzugt zelligen Polyurethane und/oder Polyurethanharnstoffe aus den Ausgangsmaterialien geschieht zweckmäßigerweise nach den in der PU-Chemie bekannten kontinuierlichen oder diskontinuierlichen Verfahrenstechniken.

Von Interesse ist hierbei, daß die Viskosität der erfindungsgemäß zu verwendenden wäßrigen Lösungen durch Zusätze von bis zu 50 %, vorzugsweise 5 bis 25 %, Harnstoff bezogen auf Feststoff der wäßrigen Lösung des Ausgangsmaterials, vielfach deutlich vermindert und die Mischbarkeit, bzw. deren Verarbeitbarkeit und Dispergierbarkeit in der Reaktionsmischung verbessert werden kann, so daß sich Harnstoffzusätze zu (A) von 5 bis 0,5, vorzugsweise 30 bis 3 Gew.-%, bezogen auf Feststoff (A) als Verarbeitungshilfe empfehlen. Es ist weiterhin bemerkenswert, daß der Harnstoffzusatz vielfach weichmachend wirken kann.

Die erhältlichen Verfahrensprodukte, insbesondere die erfindungsgemäß bevorzugten Schaumstoffe mit Raumgewichten zwischen 15 und 300 g/l, haben zumeist feinporigen, homogen wirkenden Charakter. Sie können Rezeptur- und/oder verfahrensabhängig weitgehend offenporig oder weitgehend geschlossenporig sein. Sie haben vielfach den Charakter von halbharten bis Hartschäumen mit gutem bis sehr gutem Aufnahmevermögen für Wasser bzw. wäßrige Flüssigkeiten. Sie sind vielfach weitgehend biologisch abbaubar, wahrscheinlich aufgrund ihres potentiellen Gehaltes an natürlichen Substanzen, was sie auch als gegebenenfalls weitgehend abbaubaren Träger für Mikroorganismen z.B. bei Biofiltern oder Kläranlagen geeignet macht.

Aufgrund des erzielbaren Hartschaumcharakters sind Formteile oder Konstruktionselemente aus den Verfahrensprodukten gut herstellbar, wobei von Interesse ist, daß die erfindungsgemäß zugänglichen Schaumstoffe oftmals im Temperaturbereich zwischen 100 und 200°C thermoplastisch formgebend nachbearbeitet, z.B. geprägt oder mehrdimensional verformt werden können.

Zu den in Betracht kommenden Ausgangsmaterialien ist folgendes zu bemerken:
die Prozentangaben für die Einsatzmengen der jeweiligen Rezepturbestandteile ergänzen sich im Rezeptur-Einzelfalle zu 100 %;
die angegebenen pH-Werte sind mit M&N Tritest L-pH-Meßpapier in wäßriger Lösung bestimmt worden.

Als Polyisocyanate oder auch Polyisocyanatgemische kommen die aus dem Stand der Technik bekannten aliphatischen, araliphatischen und/oder aromatischen, modifizierten und/oder unmodifizierten Polyisocyanate in Betracht, wie sie z.B. in DE-OS 4 309 691 (Spalten 2 und 3) und DE-OS 2 832 253 (Seiten 10 und 11) beschrieben werden, wobei aufgrund ihrer guten Zugänglichkeit, bzw. ihres geringen Dampfdruckes die technischen, auf Basis von Anilin-Formaldehyd-Kondensaten zugänglichen MDI-Typen bevorzugt werden.

Die Polyisocyanate sind in den Verfahrensprodukten in Mengen von 12 bis 60, vorzugsweise 15 bis 40 Gew.-% eingebaut enthalten.

Die Polyole A) weisen mindestens zwei OH-Gruppen und ein Molekulargewicht von 62 bis 10 000 auf und kommen, gegebenenfalls als Gemisch, erfindungsgemäß in Form ihrer 50 bis 98 %igen, insbesondere 60 bis 95 %igen, wäßrigen Lösungen, gegebenenfalls aber auch in Mischformen von gelöst, und/oder kolloid und/oder dispersionsartig verteilt, zum Einsatz.

Vor allem kommen als wäßrige Lösungen der Polyole A) solche der in großen Mengen verfügbaren Mono- und/oder Di- und/oder Oligo- und/oder Poly-Zucker wie Xylose, Dextrose, Fructose, Glucose, Lactose oder Saccharose oder auch die durch fermentative, enzymatische oder hydrolytische Prozesse aus Cellulosen oder Stärken erhältlichen Zuckergemische, etwa die sogenannten Zucker-, bzw. Glucosesirupe oder auch gegebenenfalls aufkonzentrierte Pflanzensäfte, z.B. Zuckerrohr- oder Zuckerrüben-Preßsäfte in Betracht.

Besonders gut eignen sich Saccharose enthaltende Lösungen.

Es sind aber auch geeignet: Zuckeralkohole, etwa Sorbit, Mannit oder Xylit, sowie Zuckersäuren, Molkekonzentrate, Pflanzengumme, Dextrine, Dextrane, aufgeschlossene bzw. derivatisierte Starken und Cellulosen, die weitgehend wasserlöslich sind, z.B. Hydroxyethyl-cellulosen, -stärken, Zellulosesulfate, Polymere und Copolymere des Vinylalkohols, sowie des Formaldehyds, die sogenannten Formosen, sowie im Grundsatz auch niedere Polyhydroxylverbindungen wie etwa Glycerin, Trimethylolpropan, Pentaerythrit und deren vorzugsweise wasserlösliche Kondensations- bzw. Alkoxylierungsprodukte und die aus den verschiedenen Polyhydroxylverbindungen herstellbaren Borsäureaddukte.

Zu den zu verwendenden Polyhydroxylverbindungen A) werden erfindungsgemäß neben OH-Gruppen enthaltenden, wasserlöslichen Polymerisaten oder Polykondensaten, wie z.B. relativ niedermolekularen Polyvinylalkoholtypen, Acrylamidpolymerisaten, Weinsäurepolyestern auch Eiweiße bzw. aufgeschlossene Eiweiße bzw. Eiweißhydrolysate, Molekonzentrate oder Polyacrylnitrilhydrolysate sowie Kollagene, Gelatinen und Pflanzengumme (Polyzucker) hinzugerechnet.

Weiterhin zählen erfindunsgemäß zu den Komponenten A):

Vorzugsweise in Wasser lösliche, gegebenenfalls auch dispersions- und/oder kolloidartig lösliche N-Methylol-Verbindungen wie Methylolverbindungen des Harnstoffs, des Biurets oder von Polyharnstoffen, des Guanidins, der Polyamide, der Polyacrylamide, des Dicyandiamids, des Urazols, des Melamins, wobei letztere, wie die ersteren, in Form ihrer wasserlöslichen handelsüblichen Harnstoff-, bzw. Melamin-Formaldehyd-Harze, bevorzugt in Betracht kommen, sowie fernerhin auch C-Methylolverbindungen, wie die wasserlöslichen Resole, Resorcin-Formaldehydharz-Vorstufen oder Keton-Formaldehyd-Harz-Vorstufen bzw. Glyzerin, Trimethylolpropan und deren Kondensate, gegebenenfalls unter Einbau von Zitronen- oder Weinsäure.

Weiterhin kommen, insbesondere für die Erzeugung brandwidriger Verfahrensprodukte gut geeignet, erfindungsgemäß auch als Polyole A) in Betracht - gegebenenfalls in Abmischung mit anderen Polyolen A) und/oder Harnstoff - Umsetzungsprodukte aus Borsäuren, vorzugsweise o-Borsäure und/oder Phosphorsäuren, z.B. Polyphosphorsäuren insbesonders jedoch o-Phosphorsäure, mit Alkanolaminen, wie sie z.B. durch Umsetzung der 85 %igen technischen o-Phosphorsäure bei 15 bis 150°C mit insbesondere Monoethanolamin, gegebenenfalls und/oder Di- und/oder Triethanolamin erhalten werden, bzw. Umsetzungsprodukte von einem Mol o-Borsäure mit einem bzw. zwei oder drei Molen Monoethanolamin, gegebenenfalls und/oder Di- und/oder Triethanolamin, die vorzugsweise mit o-Phosphorsäure auf pH-Werte zwischen 6 und 7 eingestellt werden.

Erfahrungsgemäß besonders gut geeignet sind als in wäßriger Lösung bzw. gegebenenfalls auch kolloid und/oder dispersionsartig, bei pH-Werten zwischen 5 und 8, vorzugsweise 6 und 7, vorliegende Polyole A): Saccharose, sowie die sogenannten aus Stärke oder Zellulose zugänglichen Zuckersirupe sowie Melamin- bzw. Harnstoff- Methylolverbindungen, sowie Umsetzungsprodukte aus o-Bor- und/oder o-Phosphorsäure mit Alkanolaminen, insbesondere den drei Ethanolaminen sowie gegebenenfalls Kombinationen dieser Komponenten A).

Alle Polyole A) können allein oder als Gemische verschiedener Spezies eingesetzt werden.

Die erfindungsgemäßen Verfahrensprodukte enthalten 30 bis 70, vorzugsweise 50 bis 65 Gew.-% solcher Polyole A) eingebaut.

Als basische Polyole B) bzw. Polyolgemische, eignen sich unter den Alkanolaminen besonders gut: Triethanolamin und/oder Diethanol-Propanolamin und/oder Ethanol-Dipropanolamin und/oder Tripropanolamin in Kombination mit deren Ethoxylierungs-, vorzugsweise Propoxylierungsprodukten mit OH-Zahlen zwischen 300 und 800, vorzugsweise 400 und 700.

Von speziellem Interesse, da besonders gut brauchbar, sind Kombinationen aus Triethanolamin und dessen Propoxylierungsprodukten mit OH-Zahlen von 400 bis 600, insbesondere 450 bis 550.

Es kommen aber auch Monoethanolamin, Monopropanolamin, Diethanolamin, Dipropanolamin, Ethanol-Propanolamin und deren in den genannten OH-Zahl-Bereichen liegende Ethoxylierungs- und/oder Propoxylierungsprodukte bzw. Mischalkoxylierungsprodukte, z.B. auf Basis von Ammoniak, Ethylendiamin, Propylendiamin und/oder N-Dimethylethylendiamin und/oder Diethylentriamin und/oder Triethylentetramin und/oder Hexamethylendiamin in Betracht.

Als deren Salze mit Säuren oder Säuregemischen C) kommen als besonders gut geeignet deren Salze mit Phosphorsäuren, insbesondere mit o-Phosphorsäure aber gegebenenfalls auch mit Methylphosphonsäure, Phosphinsäuren, Polyphosphorsäuren, mit sauren Alkylphosphaten wie Dibutylphosphat, mit Borsäuren, etwa o-Borsäure, mit Schwefelsäuren, etwa H₂SO₄ und/oder (organischen) Sulfonsäuren, Amidosulfonsäure, HCl, HBr, mit Kohlensäure oder niederen Mono- und/oder Polycarbonsäuren und/oder deren Teilester, wie z.B. Phosphonocarbonsäuren, Ameisensäure, Essigsäure, Maleinsäure, Maleinsäurehalbester, Milchsäure oder Zitronensäure in Betracht.

Die basischen Polyole B) und/oder deren Salze mit Säuren C) sind in den erfindungsgemäßen Verfahrensprodukten in Mengen von 3 bis 35, vorzugsweise 5 bis 25, Gew.-% eingebaut enthalten.

Als Fettsäuren D) kommen allein oder im Gemisch aromatische, araliphatische, cyclische, bevorzugt jedoch aliphatische, bei 0 bis 45°C, vorzugsweise bei 10 bis 25°C, flüssige fluorhaltige und/oder fluorfreie Sulfon-, insbesondere Carbonsäuren, vorzugsweise Monocarbonsäuren bzw. Carbonsäuregemische, in Betracht, wie etwa Alkylsulfonsäuren, Soja-, Oliven-, Sonnenblumen-, Leinsaat-, Harz-, Wurzelöl-, Tallöl-, Rizinusöl-, Fischöl-, Rapsöl-, Palmkernfettsäuren. Besonders gut geeignet ist Ölsäure. Es kommen aber auch in Frage: (Iso)Stearinsäure, Montanfettsäuren, Kollophoniumsäuren, Phenylalkylcarbonsäuren, gegebenenfalls alkoxylierte Phenolcarbonsäuren, Alkylbenzolsulfon- bzw. -carbonsäuren oder Phthal-, bzw. Maleinhalbester langkettiger Fettalkohole.

Als Salze E) der Fettsäuren D) sind vorzugsweise die Alkalisalze, vorzugsweise Na- und/oder K-Salze und/oder Salze der Fettsäuren mit den basischen Polyolen B) geeignet, obgleich auch Ammoniumsalze und/oder Salze anderer Metalle und/oder Amine in Betracht zu ziehen sind.

Die Fettsäuren D) liegen stöchiometrisch vorzugsweise im Unterschuß, bezogen auf die basischen Komponenten im gesamten Reaktionsgemisch vor, wobei dessen pH-Werte auch unter 7 liegen können.

Die Fettsäuren D) sind in den erfindungsgemäßen Verfahrensprodukten in Mengen von 0 bis 10, vorzugsweise 1 bis 6,5, Gew.-% eingebaut enthalten, obgleich prinzipiell gegebenenfalls auch höhere Fettsäuremengen eingebaut werden können.

Die Anwesenheit der Fettsäuren D) ist zwar prinzipiell nicht unbedingt erforderlich, ihre Anwesenheit verbessert jedoch die Bildung brauchbarer Schaumstoffe, insbesondere bei den bevorzugten Einsatzmengen, in unerwartet deutlichem Maße, so daß ihre Mitverwendung unbedingt empfehlenswert ist.

Zu den Hilfsmitteln H) wären neben Harnstoff als Verarbeitungshilfe, auch die in der Polyurethan-Schaumstofftechnologie üblichen, aktivierend bzw. katalytisch wirkenden speziellen Amine und metallorganischen Verbindungen z.B. von Zinn, Blei, Zink zu nennen. Obgleich deren Mitverwendung sehr wohl in Betracht zu ziehen ist, zeigt sich überraschenderweise, daß im erfindungsgemäßen Falle im allgemeinen auf sie verzichtet werden kann, ohne daß sich dies negativ auf die Schaumstoffbildung auswirkt. Dieser Umstand ist als technischer Vorteil zu werten.

Als Flammschutzmittel haben sich neben den gegebenenfalls in wäßriger Lösung einsetzbaren Metall- und/oder Ammonium-Halogeniden, insbesondere Chloriden und Bromiden, sowie Halogenalkylphosphaten auch halogenfreie Ester und/oder Metall- bzw. Ammoniak-, und/oder Amin-Salze, vorzugsweise der Poly- und/oder Orthoformen der Phosphorsäure und/oder Borsäure bewährt, etwa Alkali- bzw. Ammoniumpolyphosphate oder Diphenyl-kresylphosphat, bzw. Triäthylphosphat.

Als gegebenenfalls mitzuverwendende Füllstoffe I) kommen die in der PU-Schaumstofftechnologie bekannten, zumeist pulverförmigen, gegebenenfalls auch faserigen oder plättchenförmigen Füllstoffe in Betracht, seien es z.B. Gesteinsmehle wie Kreide, Dolomit, Schwerspat, Kieselsäure, Silikate, Tone, Aschen, Apathite, Gipse, Mg-, bzw. Al-Hydroxid oder Sand, Glas, Eisenoxide aber auch Stärke, Cellulose-, Holz-, Getreidemehle, Milchpulver, Kunstharzpulver, Metallpulver, roter Phosphor, Koks-, Steinkohlen-, Braunkohlenpulver, Ruße, Graphit, Blähgraphit, Fasern, (Hohl)Kugeln oder Schaumperlen, oder Kunststoff-Thermoplastpulver, bzw. Duroplastpulver z.B. auf Basis von Melamin- und/oder Harnstoff-Aminoplasten.

Von besonderem Interesse ist, daß erfindunsgemäß auch nunmehr wäßrige Füllstoffzubereitungen, z.B. kolloide Lösungen, Sole oder z.B. Kieselsäure- und/oder Kunststoffdispersionen als Füllstoffe eingesetzt werden können, z.B. Polyacrylnitril-, Poly-Styrol/Acrylnitril, Poly-Styrol/Butadien, Poly-Vinylacetat-, Poly(Meth)Acrylat-, Poly-Olefin-Kautschuklatices, Ton- bzw. Montmorillonitdispersionen oder Kieselsäuresole, wobei solche bevorzugt sind, die Feststoffgehalte von über 45 Gew.-% aufweisen und bei 0 bis 50°C, vorzugsweise bei 10 bis 35°C, filmbildend sind.

Es ist hierbei in Betracht zu ziehen, daß z.B. die erfindungsgemäßen Polyhydroxylverbindungen A) und/oder B), etwa Rohrzucker oder Triethanolamin, in den wäßrigen Füllstoffdispersionen vielfach aufgelöst werden können, wodurch eine übermäßige wäßrige Verdünnung des Reaktionssystems vermieden werden kann.

Der Feststoffanteil der Füllstoffe in den erfindungsgemäßen Verfahrensprodukten kann zwischen 0 und 60, vorzugsweise zwischen 0 und 30, Gew.-% liegen.

Die erfindungsgemäße Schaumstoffherstellung erfolgt üblicherweise bei Ausgangsmaterialtemperaturen von 10 bis 100°C, vorzugsweise 15 bis 50°C. Da bisweilen im Reaktionsgemisch enthaltene größere Wassermengen im Laufe der sich selbst beschleunigenden Isocyanatreaktionen durch diese erwärmt werden müssen, kann es zuweilen vorteilhaft sein, die Reaktionskomponenten sämtlich oder bevorzugt teilweise vorzuerwarmen und/oder das reagierende Reaktionsgemisch noch zu erwärmen, z.B. durch Mikrowellen, IR-Strahlung oder in einem Ofen und/oder Formen mit geringer Wärmeableitung bzw. mit Beheizung zu verwenden.

Andererseits ist es oftmals vorteilhaft, die frisch hergestellten Schaumstoffe durch Erwärmen auf Temperaturen von 30 bis zu 150°C, vorzugsweise bis zu 120°C, insbesondere bis 100°C, zur abschließenden Reaktion und zur Trocknung zu bringen.

Die Herstellung der Verfahrensprodukte kann kontinuierlich oder diskontinuierlich bei Hochdruck- und/oder Niederdruckvermischung, bei Normaldruck oder erhöhten Drucken, nach den in der PU-Schaum-Technologie üblichen Verfahrensweisen, z.B. durch flächiges Aufsprühen, durch Aufgießen oder Eingießen, durch Aufschäumen in Hohlräumen bzw. Formen, oder in z.B. Doppeltransportbandanlagen oder Sprühtürmen z.B. zur Perlenherstellung erfolgen.

Die Komponenten können einzeln oder auch im Gemisch, gegebenenfalls auch in Form von frisch erzeugten Vormischungen in den Misch-, bzw. Reaktionsraum eingebracht werden. Der Reaktionsraum kann gegebenenfalls auch temperiert oder isoliert werden, z.B. zur Herstellung von Formteilen mit verdichteten Randzonen. Die Verwendung von Düsenmischköpfen und/oder Rührwerkmischköpfen und/oder Statikmischern ist in Betracht zu ziehen.

Die Reaktionsgeschwindigkeit der Mischungen kann durch Zufügen von wässriger Alkalihydroxyd-Lösung (schneller) oder o-Phosphorsäure (langsamer) auf die verfahrensgemäßen Erfordernisse leicht eingestellt werden.

Die Viskosität der Mischungen kann durch Harnstoffzusätze in gewissem Rahmen angepaßt, bzw. erniedrigt werden.

Die erfindungsgemäß zugänglichen Verfahrensprodukte sind vorzugsweise zellig, d.h. offen- und/oder geschlossenzellig. Weniger bevorzugte, nicht oder wenig zellige Produkte können unter Weglassung der Treibmittel (G) unter Drucken zwischen 1 und ca. 150 bar erhalten werden.

Die bevorzugten Verfahrensprodukte haben Trockenraumgewichte zwischen 15 und 300, vorzugsweise 18 und 100 g/l, insbesondere 20 und 50 g/l, obgleich gegebenenfalls auch höhere oder auch niedrigere Raumgewichte erzielbar sind. Die erfindungsgemäßen Verfahrensprodukte werden vorzugsweise für Zwecke der

akustischen und/oder thermischen und/oder mechanischen Isolation, vielfach als Hohlraumfüllungen oder Sandwiches mit gegebenenfalls wasserdampfdurchlässigen oder auch Luft- bzw. Gas-undurchlässigen Deckschichten eingesetzt. Sie haben bei Wasserdampf-durchlässigen Deckschichten die Fähigkeit, durch einen Luftfeuchteabhängigen Wasserhaushalt besonders gute Raumklimata zu gewährleisten.

Sie sind jedoch auch als Basis für Vacuumpanele, als Material für Schockabsorber oder Absorber für gasförmige und vorzugsweise flüssige Medien, insbesondere wäßrige Flüssigkeiten geeignet, sowie zur Herstellung von gegebenenfalls bioabbaubaren Gefäßen bzw. Substraten z.B. bei der mikrobiologischen Technik und/oder Pflanzenaufzucht und/oder Wirkstoff-Formulierung mit gegebenenfalls Depotwirkung. Weitere Einsatzgebiete wurden bereits oben aufgelistet.

Im folgenden soll die Erfindung beispielhaft erläutert werden. Die angegebenen Prozente beziehen sich auf das Gewicht, sofern nichts anderes vermerkt ist.

### Ausgangsmaterilaien

### Wäßrige Lösungen der Polyole A)

A/1:
   75 %ige wäßrige Lösung eines handelsüblichen Hexamethylol-Melaminharzes (Madurit® MW 550, Fa. Casella)
A/2:
   75 %ige wäßrige Lösung eines handelsüblichen Harnstoff-Methylol-Harzes (Urecoll® 237, Fa. BASF)
A/3:
   75 %ige wäßrige Rohrzucker-Lösung.
A/4:
   Handelsüblicher, ca. 80 %iger, wäßriger Glucosesirup (Dormamix®, Fa. Pfeiffer & Langen).
A/5:
   Umsetzungsprodukt aus 1 Mol o-Borsäure und 1 Mol Monoethanolamin, hergestellt bei 80°C und anschießend mit 85 %iger wäßriger o-Phosphorsäure auf einen pH-Wert von 6,3 eingestellt.
A/6:
   Auf einen pH von 6,5 eingestelltes Umsetzungsprodukt von 85 %iger wäßriger o-Phosphorsäure und 75 %iger wäßriger Lösung von Triethanolamin, hergestellt durch langsames Einrühren von Triethanolamin in die vorgelegte Phosphorsäure bei 90°C und Zusatz von 10 % Harnstoff (bezogen auf Gesamtmenge) und einstündiges Nachrühren bei dieser Reaktionstemperatur.
A/7:
   Handelsüblicher, aufkonzentrierter, ca. 25 % Wasser enthaltender Zuckerrüben-Preßsaft, sogenannter Zuckerrübensirup.
A/8:
   Dispsersion von 300 Teilen handelsüblichem Haushalts-Weizenmehl in 400 Teilen Wasser von 18°C.
A/9:
   Handelsüblicher, enzymatisch erhaltener, ca. 70 %iger Zuckersirup: Dormadex® 98/70, Fa. Pfeiffer & Langen.

### Basische Polyole B)

B/1:
   Triethanolamin.
B/2:
   Propoxyliertes Triethanolamin, OH-Zahl 500.
B/3:
   Propoxyliertes Triethylentetramin, OH-Zahl 580.
B/4:
   Mit einem Gemisch gleicher Teile Ethylenoxid und Propylenoxid alkoxyliertes Ammoniak, OH-Zahl 420.

### Säuren C)

C/5:
   85 %ige technische o-Phosphorsäure.

### Säuren D)

D/1:
   Ölsäure.
D/2:
   Rizinolsäure.
D/3:
   Leinölfettsäuregemisch.
D/4:
   Tallölfettsäuregemisch.

### Stabilisatoren F)

F/1:
   Handelsüblicher Schaumstabilisator auf Basis von Polyetherpolysiloxanen (AC 3408; Bayer AG).

### Treibmittel G)

G/1:
   Cyclopentan.

### Polyisocyanate P)

P/1:
   Technische MDI-Type auf Basis von Anilin-Formaldehyd-Kondensaten (Desmodur® 44 V 20; Bayer AG).
P/2:
   Technisches Toluylendiisocyanat (Desmodur® T 80; Bayer AG).
P/3:
   Technisches Hexamethylendiisocyanat-Trimeres (Desmodur® N 100; Bayer AG).

### Bemerkung:

Sämtliche pH-Werte wurden in 10 %iger wäßriger Lösung gemessen.

### Beispiele

### Beispiel 1

a) Es wurde eine Mischung aus 300 Teilen A/1; 25 Teilen B/2; 14 Teilen D/1; 20 Teilen B/1; 2 Teilen F/1 sowie 10 Teilen C/5 und 30 Teilen G/1 hergestellt und dann bei Raumtemperatur intensiv vermischt mit 110 Teilen P/1. Anschließend wurde der Ansatz in eine in einem Hartschaumkasten befindliche Kastenform aus Packpapier gegeben und so aufschäumen lassen. Man erhielt einen gut aufgetriebenen stabilen Schaum, der nach ca. 3 Minuten abgebunden hatte. Nach dem Trocknen bei 90°C wurde ein Raumgewicht von 35 g/l festgestellt. Der Schaumstoff hatte gleichmäßige Porenstruktur, hatte spröden Hartschaumcharakter und erreichte in der Brandprüfung die Klassifizierung B2.

### Beispiel 2

a) Es wurde analog Beispiel 1a) gearbeitet, jedoch wurden zuvor noch 30 Teile Harnstoff in der Lösung A/1 aufgelöst. Die Reaktionsmischung führte zu einem Beispiel 1 vergleichbaren Schaum, jedoch mit feinerer Porenstruktur und einem Raumgewicht von 28 g/l.
b) Es wurde analog Beispiel 1a) gearbeitet, jedoch wurde anstelle von A/1 ein Gemisch gleicher Teile A/2 und A/3 verwendet. Der erhaltene feinporige Schaumstoff hatte nach dem Trocknen bei Raumtemperatur ein Raumgewicht von 30 g/l und erreichte die Brandklasse B2.

### Beispiel 3

a) Bei 80°C wurde eine Lösung von 6 180 Teilen o-Borsäure in 6 108 Teilen Monoethanolamin hergestellt. 3 072 Teile dieser Lösung wurden mit (1 380 Teile) C/5 auf einen pH-Wert von 6,5 eingestellt.
b) 300 Teile dieser Lösung wurden mit 25 Teilen B/2; 20 Teilen B/1; 12,5 Teilen D/1; 10 Teilen C/5; 2 Teilen F/1 und 30 Teilen G/1 gut verrührt und dann mit 110 Teilen P/1 intensiv bei Raumtemperatur vermischt. Das Reaktionsgemisch wurde in die Kastenform überführt und dort aufschäumen gelassen. Es entstand ein feinporiger, stabiler und homogen wirkender Schaum, der nach dem Trocknen ein Raumgewicht von 42 g/l aufwies. Er erreichte im Brandtest die Klassifizierung B2.

### Beispiel 4

a) Es wurde gemäß Beispiel 3b) gearbeitet, jedoch anstelle von 10 Teilen C/5 wurden 2 Teile einer 50 %igen wäßrigen NaOH-Lösung eingerührt. Das Reaktionsgemisch schäumte nunmehr deutlich schneller und noch feinporiger auf. Das erzielte Trocken-Raumgewicht lag bei 33 g/l.
b) Es wurde analog Beispiel 4a) gearbeitet, jedoch anstelle von P/1 wurde ein Gemisch aus 90 Teilen P/1 und 40 Teilen P/3 verwendet. Nach dem Trocknen bei 90°C wurde ein feinporiger Schaumstoff mit dem Raumgewicht von 30 g/l erhalten, der die Brandklasse B2 erreicht.

### Beispiel 5

a) 61,8 Teile o-Borsäure wurden in 123 Teilen Monoethanolamin bei 75°C aufgelöst. 2 575,2 Teile dieser Lösung wurden mit 1 778 Teilen C/5 bei 80°C gut verrührt. Die erhaltene Lösung hatte einen pH-Wert von 6,3.
b) 600 Teile dieser Lösung wurden mit 50 Teilen B/2; 20 Teilen B/1; 30 Teilen D/1; 20 Teilen C/5; 5 Teilen F/1 sowie 62 Teilen G/1 verrührt und dann mit 230 Teilen P/1 bei Raumtemperatur intensiv vermischt. In der Kastenform schäumte das Reaktionsgemisch zu einem sehr feinporigen, stabilen Schaumstoff auf, der nach ca. 3 Minuten abgebunden hatte. Nach dem Trocknen bei 90°C wurde ein Raumgewicht von 30 gefunden sowie die Brandklase B2 erreicht.

### Beispiel 6

a) 61,8 Teile Borsäure wurden mit 149 Teilen Triethanolamin bei 90°C gelöst. Diese Lösung wurde mit 57,5 Teilen C/5 versetzt und bei 75°C 2 Stunden gerührt. In 80 Teilen der so erhaltenen Lösung wurden noch 10 Teile Harnstoff und 10 Teile A/7 aufgelöst. Der pH-Wert der erhaltenen Lösung lag bei 6,4.
b) Die so erhaltene Lösung wurde gemäß Beispiel 5b) weiterverarbeitet. Man erhielt einen feinporigen, stabilen Schaum, der nach dem Trocknen bei 90°C ein Raumgewicht von 38 aufwies und die Brandklasse B2 erreichte.

### Beispiel 7

200 Teile A/6; 100 Teile A/3; 40 Teile B/2; 20 Teile B/1; 15 Teile D/3; 5 Teile D/1; 3,5 Teile F/1; 30 Teile G/1 werden verrührt und bei 18°C intensiv mit 125 Teilen P/1 vermischt. Dann läßt man das Reaktionsgemisch in der Kastenform aufschäumen und trocknet bei 45°C. Man erhält einen homogen wirkenden feinporigen Schaumstoff mit einem Raumgewicht von 40 g/l, der die Brandklasse B2 erreicht.

### Beispiel 8

a) In 150 Teilen A/8 werden 150 Teile Lösung gemäß Beispiel 5a) und 60 Teile A/7 bei 45°C gelöst.
b) 300 Teile dieser Lösung werden gemäß Beispiel 3b) zu einem Schaumstoff verarbeitet. Man erhält nach dem Trocknen einen homogen wirkenden Schaumstoff mit einem Raumgewicht von 45 g/l, der die Brandklasse B2 erreicht.

### Beispiel 9

150 Teile A/4 und 150 Teile A/7 werden mit 3 Teilen 50 %iger NaOH, 30 Teilen B/2; 25 Teilen B/3; 20 Teilen B/1; 17 TeilenD/4; 3 Teilen F/1; 35 Teilen G/1 gut verrührt und dann mit 160 Teilen P/1 intensiv vermischt und in die Kastenform gegeben. Diese wird sofort in einen Heizschrank von 50°C überführt, in dem die Reaktion zum Ende geführt wird. Nach dem Trocknen erhält man einen feinporigen, homogenen Schaumstoff mit einem Raumgewicht von 33. Der Schaum hat einen halbharten Charakter und eignet sich gut für Zwecke der Stoßabsorption bzw. als Verpackungsmaterial.

### Beispiel 10

450 Teile A/3 werden mit 40 Teilen B/2; 30 Teilen B/1; 15 Teilen D/1; 2,5 Teilen F/1; 25 Teilen G/1 verrührt und dann intensiv mit 100 Teilen P/2 bei 16°C vermischt. Man läßt das so hergestellte Reaktionsgemisch in der Kastenform aufschäumen. Nach dem Trocknen bei 75°C erhält man einen homogen wirkenden Schaumstoff mit durchschnittlichen Porendurchmessern um 1,0 mm.

### Beispiel 11

a) 100 Teile A/4; 100 Teile A/5; 100 Teile A/7 werden mit 25 Teilen B/2; 25 Teilen B/4 und 20 Teilen B/1 sowie 15 Teilen D/2; 2,5 Teilen F/1; 32 Teilen G/1 verrührt und dann intensiv bei Raumtemperatur mit 150 Teilen P/1 vermischt. Dann wird das Reaktionsgemisch in der Kastenform im Umluftofen bei 40°C aufgeschäumt. Nach dem Trocknen erhält man einen feinporigen, lunkerfreien Schaum mit Raumgewicht von 34, der die Brandklasse B2 erreicht.
b) Es wird wie bei a) gearbeitet, jedoch wird anstelle von A/4, jetzt A/9 verwendet. Es wird ein analog erscheinender Schaumstoff erhalten.

### Beispiel 12

Anhand der folgenden Ausführungen sollen einige Variationsmöglichkeiten der erfindungsgemäßen Schaumstoffherstellung aus wäßrigen Lösungen beispielhaft erläutert werden.
a) 300 Teile A/3; 3 Teile 50 %ige, wäßrige NaOH-Lösung; 12,5 Teile D/1; 20 Teile B/1; 25 Teile B/2; 2 Teile F/1; 30 Teile G/1; werden gut verrührt. Dann wird diese Vormischung bei ca. 18°C intensiv ca. 60 Sekunden mit 110 Teilen P/1 vermischt und in die Kastenform gegeben, wo das Reaktionsgemisch zu einem sehr feinporigen, homogenen Schaum aufgeschäumt, der bei 80°C getrocknet wird. Es wird ein Raumgewicht von 33 g/l festgestellt. Trotz des hohen Zuckeranteils ist der Schaum in Wasser kaum quellend, er nimmt jedoch Wasser, aber auch nichtwäßrige Flüssigkeiten auf. Es ist naturgemäß gut brennbar, hat einen halbharten Charakter und ist z.B. für Verpackungszwecke geeignet.
b) Es wird gearbeitet wie bei a), jedoch werden 400 Teile A/3 und 150 Teile P/1 verwendet. Man erhält einen Schaum, der ein Trocken-Raumgewicht von 35 g/l hat und im übrigen dem Schaumstoff nach a) sehr ähnlich ist.
c) Es wird gearbeitet, wie bei a), man verwendet jetzt jedoch 500 Teile A/3, 30 Teile B/1 und 165 Teile P/1. Man erhält einen Schaum, der den Typen a) und b) sehr ähnlich ist. Dieser Schaumstoff hat ein Raumgewicht von 37 und erhält 63 % Zucker eingebaut, ist aber mechanisch sehr stabil und beispielsweise zur Herstellung von Formteilen, Behältern oder Verpackungsmaterial geeignet.
d) Wenn man arbeitet wie bei a), jedoch ohne Zusatz von D/1, erhält man einen grobporigen, unregelmäßigen relativ zähen Schaumstoff mit einem Raumgewicht von ca. 60 g/l. Dieses Beispiel zeigt die stark verbessernde Wirkung der Fettsäurezusätze.
e) Wenn man arbeitet wie bei a), jedoch eine der Bevorzugungsgrenzen überschreitende Fettsäuremenge verwendet, z.B. 40 Teile, dann erhält man ein inhomogen wirkendes, lunkerhaltiges Reaktionsprodukt, das nicht als brauchbarer Schaumstoff angesprochen werden kann.
f) Es wird gearbeitet wie bei a), jedoch wird anstelle von D/1 jetzt D/2 eingesetzt. Man erhält einen feinporigen stabilen Schaumstoff, der sich nahezu nicht von dem Verfahrensprodukt nach a) unterscheidet.
g) Es wird gearbeitet wie bei a), jedoch werden anstelle von D/1 jetzt 12,5 Teile Essigsäure verwendet. Man erhält ein nur unwesentlich aufschäumendes Reaktionsgemisch, das zu einem unregelmäßigen, lunkerhaltigen Material mit Raumgewicht 220 g/l führt, das nicht als brauchbarer Schaumstoff angesprochen werden kann. Hier zeigt sich die wichtige Rolle der längerkettigen Fettsäuren.
h) Es wird gearbeitet wie unter a), jedoch ohne Zusatz von B/2. Man erhält keinen brauchbaren Schaumstoff, da nicht die Kombination von B/1 mit einem höheren Alkoxylierungsprodukt verwendet wurde.
j) Es wird gearbeitet wie bei a) jedoch ohne den Zusatz von B/1. Man erhält einen nur mäßig guten Schaumstoff, der zum Schrumpfen neigt und keine Festigkeit hat, weil ohne Trialkanolamin gearbeitet wurde.
k) Es wird wie bei a) gearbeitet, jedoch werden 60 Teile B/1 eingesetzt und das in die Kastenform überführte aufschäumende Reaktionsgemisch in einen Umluftofen von 80°C eingebracht. Man erhält einen sehr feinporigen homogenen Schaumstoff mit einem Trockenraumgewicht von 28 g/l und guten Festigkeiten.
l) Es wird wie bei a) gearbeitet, jedoch werden nunmehr in Abänderung 400 Teile A/3, 3 Teile F/1 und 80 Teile B/1 sowie 50 Teile B/2 und 170 Teile P/1 verwendet. Man erhält einen hervorragend feinporig und homogen aufgeschäumten Schaumstoff mit relativ guten mechanischen Festigkeiten, sowie einem Trockenraumgewicht von 25 g/l.
m) Man arbeitet wie bei a), jedoch werden die Einsatzmengen von F/1 und P/1 verdoppelt und die mit dem Reaktionsgemisch beschickte Kastenform wird in einen 60°C heißen Umluftofen eingestellt. Man erhält einen stabilen Schaumstoff mit auf ca. 1 mm vergrößertem mittleren Porendurchmesser, einem Raumgewicht von 18 g/l und einem weichschaumähnlichen Charakter, der als flüssigkeitsabsorbierendes Polster- und Verpackungsmaterial geeignet ist.
n) Man arbeitet wie bei a), jedoch wird statt A/3 jetzt eine Auflösung von 20 Teilen Harnstoff in 80 Teilen A/3 eingesetzt, deren Viskosität trotz höherer Feststoffkonzentration niedriger ist als die von A/3.
   Man erhält einen sehr homogen-feinporig wirkenden Schaumstoff vom Raumgewicht 26 g/l mit halbhartem bzw. dem Typ a) gegenüber deutlich weicherem, duktilen Charakter, der z.B. für Verpackungszwecke eingesetzt werden kann.
o) Man arbeitet wie bei a), jedoch wird anstelle von A/3 eine Auflösung von 2 Teilen Rohrzucker in 1 Teil eines 50 %igen Styrol/Butadien-Polymerisat-Latex (Baystal® K 8525, Bayer AG) eingesetzt.
   Man erhält einen Schaumstoff mit Raumgewicht 38 mit halbhartem Charakter.
p) Man arbeitet wie bei a), jedoch wird anstelle von A/3 jetzt eine Auflösung von 2 Teilen Saccharose in 1 Teil eines 50 %igen Polyurethanlatex (Impranil® DLN, Bayer AG) verwendet und es werden nur 1,1 Teile 50 %ige NaOH zugesetzt.
   Man erhält einen Schaumstoff vom Raumgewicht 33 mit halbhartem Charakter.
q) Man arbeitet wie bei a), jedoch werden anstelle von A/3 eine Auflösung von 2 Teilen Saccharose in 1 Teil 50 %igem Kieselsol (Baykisol® 200, Bayer AG) sowie 4 Teile F/1 eingesetzt.
   Man erhält einen feinporigen Schaumstoff mit Raumgewicht 31 g/l, der für Zwecke der Stoßabsorption eingesetzt wird.
r); s); t) Man arbeitet wie bei a), nur wird anstelle von A/3 jeweils eine 70-, 65- oder 60 %ige wäßrige Rübenzuckerlösung eingesetzt.
   In allen Fällen erhält man feinporige, annähernd a) gleichartige Schaumstoffe mit Raumgewicht um 30 g/l, die beispielsweise als isolierendes, saugfähiges und stoßabsorbierendes Verpackungsmaterial einsetzbar sind.
u) Man arbeitet wie bei a), verwendet jedoch anstelle von P/1 jetzt P/2 sowie 3 Teile F/1.
   Man erhält einen relativ spröden Leichschaumstoff mit Raumgewicht um 19 g/l, der als Hohlraumfüllung oder als Sandwichinnenlage verwendbar ist. Wenn solche Sandwiches mit einer luftdichten Kunststoffolie umhüllt und evakuiert werden, dienen sie als Isoliermaterial.
v) Man arbeitet wie bei a), verwendet als Polyisocyanat jedoch eine Mischung aus 70 Teilen P1, 10 Teilen P/2 und 20 Teilen P/3 sowie 3 Teilen F/1.
   Man erhält einen feinporigen Schaumstoff mit Raumgewicht von 26 g/l, der als Isolationsmaterial eingesetzt wird.
w) Es wird gearbeitet wie bei a), jedoch wird anstelle von A/3 jetzt A/9 eingesetzt.
   Man erhält analog a) einen stabilen, feinporigen, duktilen Schaum, der als stoßabsorbierendes Verpackungsmaterial und als Isoliermaterial verwendet wird.

## Patentansprüche

1. Verfahren zur Herstellung von gegebenenfalls zelligen Polyurethanen und/oder Polyurethan-harnstoffen durch Umsetzung von Polyisocyanaten mit
A) mindestens zwei Hydroxylgruppen aufweisenden nicht-basischen Verbindungen vom Molekulargewicht 62 bis 10 000 in Gegenwart von
B) basischen Polyhydroxylverbindungen und/oder
C) deren mit Säuren gebildeten Salzen und in Gegenwart von
D) Fettsäuren und/oder
E) deren Salzen, gegebenenfalls in Gegenwart von
F) üblichen Stabilisatoren,
G) Treibmitteln und
H) weiteren Hilfsmitteln sowie
I) Füllstoffen
bei Temperaturen von 0 bis 150°C, vorzugsweise 10 bis 60°C, dadurch gekennzeichnet, daß die Komponente A) als mindestens 50 gew.-%ige, vorzugsweise 60 bis 95 gew.-%ige, wäßrige Lösung eingesetzt wird.

2. Verfahren gemäß Anspruch 1, dadurch gekennzeichnet, daß als Komponente A) Polyalkohole und/oder Zucker und/oder N-Methylolverbindungen und/oder C-Methylolverbindungen und/oder Umsetzungsprodukte von Phosphorsäuren und/oder Borsäuren mit basischen Polyolen und/oder Eiweißlösungen bzw. Eiweißhydrolysatlösungen mit in wäßriger Lösung gemessenen pH-Werten von 5 bis 8, vorzugsweise 6 bis 7, eingesetzt werden.

3. Verfahren gemäß Ansprüchen 1 und 2, dadurch gekennzeichnet, daß als basische Polyole B) Amin-Alkoxylierungsprodukte, vorzugsweise erhältlich durch Umsetzung von Ethylenoxid und/oder Propylenoxid mit Ammoniak und/oder sonstigen Aminen wie z.B. Alkylenpolyaminen, vorzugsweise Ethylendiamin und/oder Hexamethylendiamin und/oder Polyalkylenpolyaminen, vorzugsweise Polyethylenpolyaminen, insbesondere Umsetzungsprodukte von Triethanolamin mit Propylenoxid mit OH-Zahlen von 400 bis 600, vorzugsweise 450 bis 550, eingesetzt werden.

4. Verfahren gemäß Ansprüchen 1 bis 3, dadurch gekennzeichnet, daß als Säuren C) organische Säuren, vorzugsweise niedere aliphatische Carbonsäuren und/oder anorganische Säuren, vorzugsweise o-Phosphorsäure, eingesetzt werden.

5. Verfahren gemäß Ansprüchen 1 bis 4, dadurch gekennzeichnet, daß als Fettsäuren D) aliphatische, langkettige gesättigte und/oder ungesättigte Carbonsäuren mit 9 bis 24 C-Atomen, vorzugsweise 12 bis 24 C-Atomen, vorzugsweise Ölsäure, verwendet werden.

6. Verfahren gemäß Ansprüchen 1 bis 5, dadurch gekennzeichnet, daß als Salze der Fettsäuren E) solche mit Alkalien und/oder den basischen Polyolen B), verwendet werden.

7. Verfahren gemäß Ansprüchen 1 bis 6, dadurch gekennzeichnet, daß als Stabilisatoren F) die an sich bekannten Polyetherpolysiloxan-Stabilisatoren verwendet werden.

8. Verfahren gemäß Ansprüchen 1 bis 7, dadurch gekennzeichnet, daß als Treibmittel G) die an sich bekannten Treibmittel, vorzugsweise FKW, FCKW und/oder Kohlenwasserstoffe, bevorzugt Cyclopentan, verwendet werden.

9. Verfahren gemäß Ansprüchen 1 bis 8, dadurch gekennzeichnet, daß als Hilfsmittel H) Harnstoff als Verarbeitungshilfsmittel, gegebenenfalls neben Aktivatoren, Tensiden, Reglern für Zellgröße und Zelltyp, Biociden, Konservierungsmitteln, techniküblichen Flammschutzmitteln, sonstigen Wirkstoffen, Farbgebern, Geruchsstoffen, Trennmitteln, verwendet wird.

10. Schaumstoffe, erhältlich nach dem Verfahren gemäß Ansprüchen 1 bis 9.

11. Verwendung der gemäß Ansprüchen 1 bis 9 erhältlichen Verfahrensprodukte als Formteile, Granulate, Hohlraumfüllungen, Abdichtungen, Verklebungen, Stoßabsorptionsmedien, Verpackungsmaterialien, Abdeckungen, Beschichtungen, Sandwiches und Konstruktionselemente, thermische und/oder akustische Isolationsmaterialien, Absorber für wäßrige und andere Flüssigkeiten, Träger für Wirkstoffe und Mikroorganismen, Filtermaterialien für Gase, Staube und Flüssigkeiten.
